# EUROPEAN PATENT APPLICATION

(11) **EP 1 060 774 A1**
(43) Date of publication of application: **20.12.2000**
(21) Application number: 00304898.0
(22) Date of filing: 09.06.2000
(51) Int. Cl.: B01D 1/00, B01D 53/86, B01D 53/04

(54) **Purification of gases**

(30) Priority: 14.06.1999 US 333157
(71) Applicant: AIR PRODUCTS AND CHEMICALS, INC., Allentown, PA 18195-1501 (US)
(72) Inventor: Golden, Timothy Christopher, Allentown, PA 18104 (US); Schwarz, Alexander, Bethlehem, PA 18105 (US); Hsiung, Thomas Hsiao-Ling, Emmaus, PA 18049 (US); Schaub, Elizabeth Susan, Emmaus, PA 18049-1272 (US); Taylor, Fred William, Coplay, PA 18037 (US)
(74) Representative: Burford, Anthony Frederick

(57) **Abstract**

Water, carbon dioxide and carbon monoxide are removed from a gas stream (10) such as air by oxidizing the carbon monoxide to carbon dioxide and thereafter adsorbing the carbon dioxide produced, the carbon dioxide originally present and the water. The oxidation and the adsorption are conducted by contacting the gas stream with a solid oxidation catalyst material (24a; 26a) such as palladium on alumina for oxidizing the carbon monoxide to carbon dioxide and thereafter and at substantially the same temperature with a solid adsorbent (24b, 24c; 26b, 26c) such as alumina/zeolite for the removal of the carbon dioxide and water. Hydrogen in the gas stream can be removed (24d;26d) therefrom by adsorption or by catalytic oxidation to water and adsorption of the water so produced.

## Description

The present invention relates to the removal of carbon monoxide and optionally hydrogen from a gas stream such as air or nitrogen for the production of a purified gas stream, which may be high purity nitrogen gas.

In many chemical processes, CO and H₂ are undesired species because of their chemical reactivity. For example, the electronics industry requires high purity N₂ (less than 5 parts per billion by vol. of CO and H₂) for the production of semiconductor materials. Impurities present in the N₂ during formation of the silicon wafers greatly increase chip failure rates. When air is subjected to cryogenic separation to produce N₂, since N₂ and CO have similar boiling points, CO present in the feed air to the cryogenic column is substantially unaffected by the distillation process. If no special provisions are taken to the distillation process, hydrogen enriches in the product N₂ to approximately two and half times its concentration in the feed air. Therefore, the production of high purity N₂ requires either 1) removal of CO and H₂ from ambient air prior to the distillation column or 2) post-treatment of the product N₂. Oftentimes, electronics customers require both pre- and post-treatment for added system reliability.

The current techniques for trace CO and H₂ removal involve catalytic conversion of CO to CO₂ and H₂ to water with subsequent removal of CO₂ and water impurities.

In the conventional process for cryogenic separation of air to recover N₂ and O₂, feed air is compressed, then cooled to low temperature before introduction to a two stage distillation column. Unless water and CO₂ are removed from the air before cooling, these components will block heat exchangers employed for cooling the gas prior to distillation. The principal method for such removal is thermal swing adsorption (TSA) on molecular sieve. In the TSA system for CO₂ and water removal, atmospheric air is compressed to about 100 psig (700 kPa) followed by water-cooling and removal of the thus condensed water. Then the air, which is then at about 100°F (38°C), can be further cooled to 40°F (4.5°C) using refrigerated ethylene glycol. The bulk of the water is removed in this step by condensation and separation of the condensate. The gas is then passed to a molecular sieve bed or mixed alumina/molecular sieve bed system where the remaining water and CO₂ are removed by adsorption. The sorbent beds are operated in a thermal swing mode with equal periods, such as four hours (may be as long as 24 hours), being devoted to adsorption and to regeneration. By using two beds, one is operated for adsorption while the other is being regenerated and their roles are periodically reversed in the operating cycle. During the regeneration, part of the product nitrogen or waste stream from the cold box is slightly compressed with a blower and heated to about 260°C. The hot gas is passed through the bed being regenerated, perhaps for two hours, following which the regeneration gas is cooled to typically 4.5°C for the final two hours, so cooling the bed to that temperature. Regeneration is carried out in a direction counter to that of the adsorption step.

Alternatively, a PSA system may be used. In this case, cycle times are shorter (feed steps are 5-30 minutes), but feed temperature, pressure and regeneration gas remains the same. In the case of PSA, the regeneration gas is not heated.

Such a system is effective for the removal of CO₂, water and C₃₊ hydrocarbons from atmospheric air. However, conventional molecular sieve beds are not effective for the removal of CO or H₂. The main conventional technique currently used to produce CO-free N₂ includes oxidation of CO present in the ambient air to CO₂ prior to feeding to the molecular sieve system. This additional catalytic conversion systems adds to capital and operating costs of a standard N₂ plant. Alternatively, such CO removal steps may be applied to the nitrogen obtained after the air separation process.

In one known method CO is removed from nitrogen using a Ni on alumina catalyst. The principle disadvantages with this material are high cost, the need for activation in reducing gas and the pyrophoric nature of the activated material. Preferred adsorbents for trace CO removal should be less expensive, easily regenerable and not pyrophoric.

The oxidation of CO to CO₂ and H₂ to H₂O in the presence of O₂ occurs readily at high temperatures (above 500°C). These reactions can be carried out at lower temperature, about 150°C, using noble metal catalysts based on palladium or platinum (Ind. Eng. Chem., No. 8, 645, 1961). This technique is currently used commercially as a pre-treatment step for ambient air prior to the front-end adsorption system for CO₂ and water removal on a cryogenic air plant. The main disadvantages of this removal technique include 1) the need to heat the air prior introduction to the catalyst bed, 2) an extra bed that requires an additional heater and a heat exchanger and increased plot space is required and 3) the added system pressure drop increases the power requirements of the system.

Ambient temperature processes for the removal of trace impurities from inert gases are also known in the art.

US-A-4,713,224 teaches a one step process for purifying gases containing trace quantities of CO, CO₂, O₂, H₂ and H₂O in which the gas stream is passed over a material comprising elemental nickel and having a large surface area. If there is oxygen present, CO is oxidized to CO₂, otherwise it is adsorbed. The specification is rather vague as regards the nature of the substrate on which the nickel is supported, referring to it merely as a "silica-based substrate".

Processes for the ambient temperature oxidation of CO to CO₂ are given in US-A-3,672,824 and US-A-3,758,666.

US-A-5,110,569 teaches a process for removing trace quantities of carbon monoxide and hydrogen from an air stream along with larger quantities of carbon dioxide and water as a prelude to cryogenic distillation. The process is conducted by TSA or PSA using a three layer adsorption bed having a first layer for adsorbing water (suitably alumina, silica gel, zeolite or combinations thereof), a second layer of catalyst for converting carbon monoxide to carbon dioxide (suitably nickel oxide or a mixture of manganese and copper oxides) and a third layer for adsorbing carbon dioxide and water (suitably zeolite, activated alumina or silica gel). The second layer may include a catalyst for converting hydrogen to water and this may be supported palladium. Thus, US-A-5,110,569 teaches a process for removing CO, CO₂, H₂O and optionally H₂ from a feed stream (particularly air) comprising 1) initially removing water and carbon dioxide, 2) catalytic oxidation of CO to CO₂ and H₂ to H₂O and 3) removing the oxidation products. The resulting gas stream may then be purified by cryogenic distillation.

US-A-5,238,670 is similar in its disclosure but uses one of several metals including platinum and palladium supported on zeolite, alumina or silica as catalyst. There are numerous similar publications.

It is not disclosed that supported palladium can be used to convert carbon monoxide to carbon dioxide. Equally, it is not disclosed that the supported palladium used for oxidizing hydrogen is capable of adsorbing the water produced.

It is also not apparently the intention that the carbon dioxide present initially should be adsorbed prior to the oxidation of the carbon monoxide.

The catalyst employed for the oxidation of carbon monoxide is hopcalite (a mixture of manganese and copper oxides). This would be deactivated if the water content of the air were not removed prior to the carbon monoxide oxidation.

In FR-A-2739304, carbon monoxide is first oxidized to carbon dioxide at a temperature of from 80° to 150°C produced by the main air compressor. The catalyst used may be a platinum metal such as palladium on a solid support such as alumina. The carbon dioxide produced together with carbon dioxide and water present initially are then adsorbed using conventional adsorbents. Thereafter, hydrogen is adsorbed on palladium supported on alumina. Metals that can be used in place of palladium are Os, Ir, Rh, Ru, and Pt. It is stated that hydrogen is not oxidized under these conditions. This casts doubt on whether US-A-5,110,569 is correct in stating that hydrogen can be oxidized on supported palladium or other precious metals.

Because the oxidation of carbon monoxide to carbon dioxide is conducted at a higher temperature than the subsequent adsorption of carbon dioxide and water, a separate oxidation vessel is required prior to a cooler upstream of the swing adsorption vessels.

The present invention accordingly provides a process for the removal of at least water, carbon dioxide and carbon monoxide from a gas stream, comprising oxidizing the carbon monoxide to carbon dioxide and thereafter adsorbing the carbon dioxide produced, the carbon dioxide originally present and the water, wherein the oxidation and adsorption is conducted by contacting the gas stream with a solid oxidation catalyst material for oxidizing the carbon monoxide to carbon dioxide and thereafter and at substantially the same temperature with a solid adsorbent for the removal of the carbon dioxide and water.

The invention also provides apparatus for the removal of at least water, carbon dioxide and carbon monoxide from a gas stream by a process of the invention, said apparatus comprising a vessel having a gas inlet and a gas outlet and containing therebetween a solid oxidation catalyst material for oxidizing carbon monoxide to carbon dioxide upstream of a solid adsorbent for the removal of carbon dioxide and water at substantially the same temperature as said catalyst material.

Preferably, the temperature at which said oxidation is conducted is less than 50°C, more preferably 5, especially 10, to 40°C, most preferably 20 to 30°C.

The catalyst for oxidizing carbon monoxide is preferably a supported precious metal, e.g. Pd, Os, Ir, Rh, Ru, Ag, Au, Re or Pt, preferably supported on alumina, silica or zeolites. Most preferably, the catalyst is palladium or a Pt/Pd mixture supported on alumina.

The gas stream to be purified contains water which is removed by contacting the gas stream with a desiccant such as alumina or zeolite. The gas stream may also contain hydrogen which is removed by adsorption or by oxidation and adsorption of the water so produced. The oxidation of the hydrogen may be performed together with the oxidation of the carbon monoxide or separately. Preferably however, it at least in part occurs after the adsorption of carbon dioxide and water.

In contrast to the method described in FR-A-2739304, the oxidation of the carbon monoxide is carried out at substantially the same temperature as the adsorption of carbon dioxide. The gas stream may therefore be compressed in a main air compressor and may then be cooled, with consequent condensation and removal of part of its water content, prior to said catalytic oxidation.

This permits the oxidation catalyst for the carbon monoxide to be placed in the same vessel as the adsorbent for carbon dioxide and water, thus avoiding the cost of an extra vessel for the catalyst.

The adsorbent and catalyst system employed may comprise:
a) (1) a catalyst such as Pd/Al₂O₃ for oxidizing carbon monoxide to carbon dioxide, (2) a desiccant such as alumina to remove water, (3) an adsorbent for carbon dioxide such as 13X zeolite, and (4) a catalyst/adsorbent for oxidizing hydrogen and adsorbing water, such as Pd/Al₂O₃Pt/Al₂O₃ or Pd/Pt/Al₂O₃ ; or
b) (1) a catalyst such as Pd/Al₂O₃ for oxidizing carbon monoxide to carbon dioxide also serving for oxidizing hydrogen to water, (2) a desiccant such as alumina to remove water, and (3) an adsorbent for carbon dioxide such as 13X zeolite.

It may be found that complete oxidation of hydrogen to water is not achieved at low temperatures such as 25°C in the presence of a saturating concentration of water, in which case it is preferred to provide a catalyst for oxidation of hydrogen after the stage of water removal, such as immediately before or after the CO₂ adsorption.

As indicated above, the gas stream may be of air which is to be separated into oxygen and nitrogen to produce a stream of nitrogen free from carbon monoxide and optionally also from hydrogen down to ppb levels. This method of operation is referred to as the 'pre-treatment mode". Alternatively, it may be a stream of nitrogen produced in an air separation unit and then subjected to purification. This is referred to as the "post-treatment mode".

The pre-treatment mode allows the air feed to the cryogenic column to be free of CO₂, H₂O, H₂ and CO. The distillation column is then capable of producing high purity N₂.

The starting level of CO will generally be only a trace amount (up to 25 ppm). The final levels of CO is preferably no more than 5 ppb, preferably below 3 ppb, most preferably no more than 1 ppb of CO.

Processes according to the invention may be operated by TSA or PSA or variants thereof. In TSA, adsorbent regeneration is accomplished by pressure reduction followed by counter-current purge with hot gas. In PSA, adsorbent regeneration is generally accomplished by pressure reduction followed by counter-current purge with ambient temperature gas.

Feed temperatures may be as indicated above, e.g. from 5 to 40°C, with feed pressures of 2 to 15 atmospheres (0.2 to 1.5 MPa). For TSA systems, typical regeneration temperatures are 100 to 400°C. Regeneration gas can consist of N₂, O₂, Ar, He, air and mixtures thereof.

In a typical preferred embodiment, the feed to the system would be ambient air and the regeneration flow would consist of either product N₂ or more desirably waste effluent from the N₂ plant (60% O₂/40% N₂).

The invention will be further illustrated by the following description of preferred embodiments with reference to the accompanying drawings, in which:

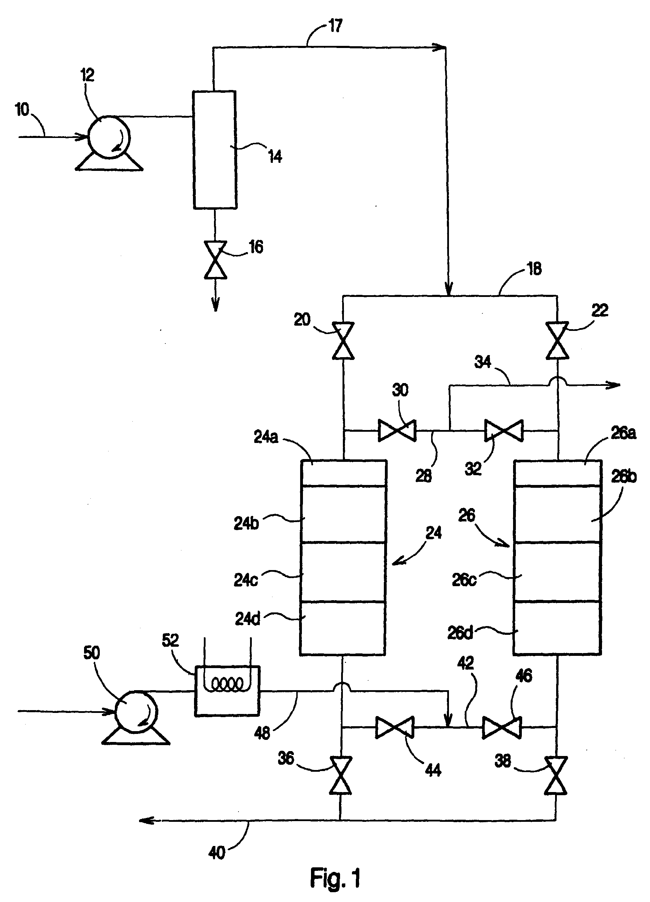

Figure 1 is a schematic diagram of apparatus for use according to a first embodiment of the invention.

As shown in Figure 1, apparatus for use according to the invention comprises an inlet 10 for a gas stream (which in this case is air) leading to a main air compressor 12. Compressed air produced by the main air compressor 12 passes to a cooler 14 in which some of the water present in the air is condensed out and exits via drain valve 16.

The cooled, partially dried air passes via a line 17 to a purification section of the apparatus which in the illustrated case operates by TSA. It should be appreciated however that this section of the apparatus can be designed to operated by PSA or any of the variants of TSA and PSA known in the art.

Air is received from line 17 into an inlet manifold 18 containing valves 20,22, which connect line 17 to respective adsorption vessels 24,26. Downstream of valves 20,22, the manifold comprises a bridge line 28 containing valves 30,32 by which the vessels 24,26 may respectively be connected to a vent-to-waste line 34.

The downstream ends of the vessels 24,26 are connected to an outlet manifold comprising valves 36,38 by which the respective vessels are connected to a product outlet line 40. Upstream of the valves 36,38, the manifold comprises a bridge line 42 containing valves 44,46 by which the respective vessels can be connected to a purge gas supply line 48, which leads from a supply of purge gas via a compressor 50 and a heater 52 to connect to bridge line 42 between valves 44 and 46. The supply of purge gas may suitably be from nitrogen separated from air purified in the apparatus shown and then subjected to cryogenic distillation or from air purified in the illustrated apparatus before it is subjected to such distillation.

Within each of the vessels 24 and 26 in Figure 1, there are four layers of adsorbent illustrated. The first layer illustrated is oxidation catalyst 24a and 26a, preferably palladium supported on alumina. The carbon monoxide initially present is oxidized in this layer. The materials of the second and third layers are conventional adsorbents for water 24b and 26b, and carbon dioxide 24c and 26c, respectively. Suitably these are activated alumina and zeolite respectively. However, any suitable adsorbent or adsorbents for water and carbon dioxide removal may be used as known in the art and these two layers may be combined into a single layer of adsorbent.

The fourth layer 24d and 26d, is of a hydrogen oxidation catalyst having water adsorbing capability such as Pd on alumina or Pt on alumina. All four layers of the adsorbents are periodically regenerated as described above.

The invention will be further described and illustrated with reference to the following specific example demonstrating the feasibility of low temperature oxidation of CO in the presence of H₂O and CO₂.

### Example 1

A laboratory reactor of 1 in (2.5 cm) inside diameter and 6 ft (1.8 m) in length was charged with a commercial 0.5% Pd/Al₂O₃ oxidation catalyst

Wet (saturated) air at 25°C and 100 psig (700 kPa) was fed at 28 standard litres/minute. The feed air contained 10 ppm CO. The CO removal capacity was determined to be 0.16 mmole of CO removed/g of catalyst/torr (133 Pa) of CO, demonstrating that CO can be oxidized to CO₂ in the presence of water at ambient temperature.

## Claims

1. A process for the removal of at least water, carbon dioxide and carbon monoxide from a gas stream, comprising oxidizing the carbon monoxide to carbon dioxide and thereafter adsorbing the carbon dioxide produced, the carbon dioxide originally present and the water, wherein the oxidation and adsorption is conducted by contacting the gas stream with a solid oxidation catalyst material for oxidizing the carbon monoxide to carbon dioxide and thereafter and at substantially the same temperature with a solid adsorbent for the removal of the carbon dioxide and water.

2. A process as claimed in Claim 1, wherein the temperature at which said oxidation is conducted is from 10 to 40°C

3. A process as claimed in Claim 2, wherein said temperature is from 20 to 30°C.

4. A process as claimed in any one of the preceding claims, wherein the catalyst material is a precious metal supported on a solid support.

5. A process as claimed in Claim 4, wherein the catalyst material is Pd, Os, Ir, Rh, Ru, Ag, Au, Re or Pt.

6. A process as claimed in Claim 4 or Claim 5, wherein the solid support is alumina, silica, silica mixed with alumina, or zeolite.

7. A process as claimed in Claim 6, wherein the catalyst material is palladium supported on alumina.

8. A process as claimed in any one of the preceding claims, wherein said catalyst material is contained in an oxidation/adsorption vessel also containing said solid adsorbent.

9. A process as claimed in any one of the preceding claims, wherein said solid adsorbent comprises a desiccant to remove water upstream of an adsorbent for carbon dioxide.

10. A process as claimed in any one of the preceding claims, wherein said solid adsorbent comprises alumina and a zeolite

11. A process as claimed in any one of the preceding claims, wherein said gas stream also contains hydrogen, and said hydrogen is removed therefrom by adsorption or by catalytic oxidation to water and adsorption of the water so produced.

12. A process as claimed in Claim 11, wherein said removal of hydrogen occurs after the removal of the carbon monoxide, carbon dioxide and initially present water.

13. A process as claimed in Claim 11 or Claim 12, wherein the hydrogen is oxidized by contact with a solid catalytic material and the water so produced is adsorbed on said material.

14. A process as claimed in Claim 13, wherein the solid catalytic material is platinum, palladium or a mixture thereof supported on a solid support.

15. A process as claimed in Claim 14, wherein the catalyst for oxidizing carbon monoxide to carbon dioxide is Pd/Al₂O₃; the solid adsorbent comprises alumina to remove water and a zeolite to remove carbon dioxide; the catalyst/adsorbent for oxidizing hydrogen and adsorbing water is Pd/Al₂O₃Pt/Al₂O₃ or Pd/Pt/Al₂O₃.

16. A process as claimed in Claim 11, wherein the catalyst for oxidizing carbon monoxide to carbon dioxide also serves for oxidizing hydrogen to water.

17. A process as claimed in Claim 16, wherein said catalyst is Pd/Al₂O₃ and the solid adsorbent alumina to remove water and a zeolite to remove carbon dioxide.

18. A process as claimed in any one of the preceding claims, wherein said gas stream is air.

19. A process as claimed in any one of Claims 1 to 17, wherein said gas stream is a nitrogen product from an air separation unit.

20. Apparatus for the removal of at least water, carbon dioxide and carbon monoxide from a gas stream by a process as defined in claim 1, said apparatus comprising a vessel having a gas inlet and a gas outlet and containing therebetween a solid oxidation catalyst material for oxidizing carbon monoxide to carbon dioxide upstream of a solid adsorbent for the removal of carbon dioxide and water at substantially the same temperature as said catalyst material.

21. An apparatus as claimed in Claim 20, wherein said vessel contains a first layer of adsorbent for the removal of water and downstream thereof a second layer of adsorbent to remove carbon dioxide.

22. An apparatus as claimed in Claim 20 or Claim 21, wherein said vessel contains downstream of said adsorbent, a material for removal of hydrogen by adsorption or catalytic oxidation to water and adsorption of the water so produced.

23. An apparatus as claimed in any one of Claims 20 to 22, wherein material contained in the vessel is as defined in any one of Claims 4 to 7, 10 and 14 to 17.
